# EUROPÄISCHE PATENTANMELDUNG

(11) **EP 1 481 776 A2**
(43) Veröffentlichungstag der Anmeldung: **01.12.2004**
(21) Anmeldenummer: 04450116.1
(22) Anmeldetag: 26.05.2004
(51) Int. Cl.: B26D 1/20, B23D 19/02

(54) **Einrichtung zum Querschneiden von Bahnen, insbesondere von Blech-oder Kunststoffbahnen**

(30) Priorität: 26.05.2003 AT 8092003
(71) Anmelder: Reinisch, Erwin, 8053 Graz (AT)
(72) Erfinder: Reinisch, Erwin, 8053 Graz (AT)
(74) Vertreter: Wildhack, Helmut, Dr. Dipl.-Ing.

(57) **Zusammenfassung**

Die Erfindung betrifft eine Einrichtung zum Querschneiden von Bahnen, mit zumindest einer quer zur Transportrichtung der Bahnen (1, 2, 3) auf zumindest einer Führungsbahn (13) verfahrbaren Schneideeinheit (15), wobei die Schneideeinheit (15) auf ihrer Führungsbahn (13), positionierbar ist und in einer vorgegebenen Position oder ausgehend von einer vorgegebenen Position zur Ausführung von zumindest einem Querschnitt vorgegebener Länge antreibbar und auf der Führungsbahn (13, 26) verfahrbar ist. Erfindungsgemäß ist vorgesehen, dass an der ein oberes und ein unteres Rollenmesser (18, 19) aufweisenden Schneideinheit (15) oder auf einem von der Schneideinheit (15) getragenen Messerträger (17) zumindest ein den zwischen den Rollenmessern (18, 19) liegenden Schneidbereich der beiden Rollenmesser (18, 19) in Schneidrichtung überragender Fangschuh (20) verschwenkbar oder auf- und abbewegbar gelagert ist, mit dem eine vor der Schneideinheit (15) befindlichen Materialbahn (1, 2, 3) dem Schneidbereich zuführbar ist.

## Beschreibung

Die Erfindung betrifft eine Einrichtung gemäß dem Oberbegriff des Anspruches 1. Einrichtungen zum Querschneiden von Materialbahnen sind bekannt. Mit derartigen Einrichtungen ist es möglich, eine angelieferte Materialbahn quer zu ihrer Transportrichtung abzulängen.

Ziel der Erfindung ist es, komplexere Schnitte vornehmen zu können, insbesondere soll ein vollautomatischer, programmgesteuerter, rationeller Zuschnitt von Materialbahnen möglich werden. Vor allem soll die Möglichkeit geboten werden, die Schnittlänge quer zur Transportrichtung der Materialbahn einstellbar zu machen, um Teilungsschnitte exakt und effizient vornehmen zu können. Der Aufbau und die Steuerung der Einrichtung sollen konstruktiv einfach sein.

Dieses Ziel wird bei einer Einrichtung der eingangs genannten Art mit den im Kennzeichen des Anspruches 1 angeführten Merkmalen erreicht.

Es ist erfindungsgemäß möglich, über eine bestimmte Länge einen Querschnitt vorzunehmen und bei einer Anzahl von nebeneinanderliegend zugeführten Bahnen jeweils eine einzige Bahn für sich quer ein- oder abzuschneiden. Die erfindungsgemäße Einrichtung ist kompakt aufgebaut und arbeitet exakt und rasch. Die Positioniermöglichkeit der Schneideinheit in beliebige Stellungen quer zur Transportrichtung der Materialbahn ist von besonderem Vorteil, da von jeder Position aus ein entsprechender Querschnitt gestartet bzw. in jeder Position ein entsprechender Schnitt vorgenommen werden kann. Mit der erfindungsgemäßen Einrichtung wird eine Automatisierung einer Einrichtung zum Querschneiden erreicht, womit der Personaleinsatz zur Abarbeitung mehrerer Aufträge reduziert wird. Die Bahnen können auf Fertigmaß abgeschnitten werden, ohne dass ein weiteres Ablängen für eine nachfolgende Weiterverarbeitung erfolgen muss. Des weiteren können die Schnitte derart gesetzt werden, dass die benötigten Formate mit geringstmöglichem Verschnitt in kürzester Zeit zugeschnitten werden können. Die abzulängenden Bahnen können exakt von den Rollenmessern geschnitten werden, da sie vom Fangschuh erfasst und in Schneidhöhe gebracht werden, ohne dass Randbeschädigungen eintreten. Der Fangschuh erfasst und führt den Rand der Bahn dem Schneidespalt bzw. -bereich zu. Der Fangschuh ist mit einer Betätigungseinrichtung verstellbar, die sein vorderes Ende unter die abzulängende Materialbahn einführt und Sorge trägt, dass diese Materialbahn auf die erforderliche Höhe des Schneidspaltes gebracht wird.

Von Vorteil für das Schneidverhalten der erfindungsgemäßen Einrichtung sind die Merkmale der Ansprüche 3 und 4. Es werden damit exakt verlaufende Kanten beim Schneidvorgang erreicht.

Um unterschiedliche Materialien sowie Materialstärken berücksichtigen zu können, sind die Merkmale des Anspruches 5 von Vorteil.

Auch die Merkmale des Anspruches 9 tragen zu einer exakten Ausbildung der Schnittkanten bei, da mit diesen Merkmalen erreicht werden kann, dass die Umfangsgeschwindigkeit des angetriebenen, insbesondere oberen, Schneidmessers der Vorschubsgeschwindigkeit der Schneideinheit bzw. der Schnittgeschwindigkeit entspricht.

Um eine Voreinstellung der Höhe der abzulängenden Materialbahnen zu erreichen, sind die Merkmale des Anspruches 7 von Vorteil, da bei einem vorangehenden Anheben oder Absenken der Materialbahnen die Tätigkeit des Fangschuhs erleichtert wird.

Die Tätigkeit der Schneideinheit und des Fangschuhs wird so wie die Verstellbewegung der Schneideinheit auf ihrer Führungsbahn und die erforderlichen Bewegungsabläufe durch eine zentrale Positionier- bzw. Steuereinheit exakt gesteuert.

Im folgenden wird die Erfindung anhand der Beschreibung, der Zeichnungen und der Ansprüche beispielsweise näher erläutert, in denen vorteilhafte Ausführungsformen der Erfindung beschrieben sind.

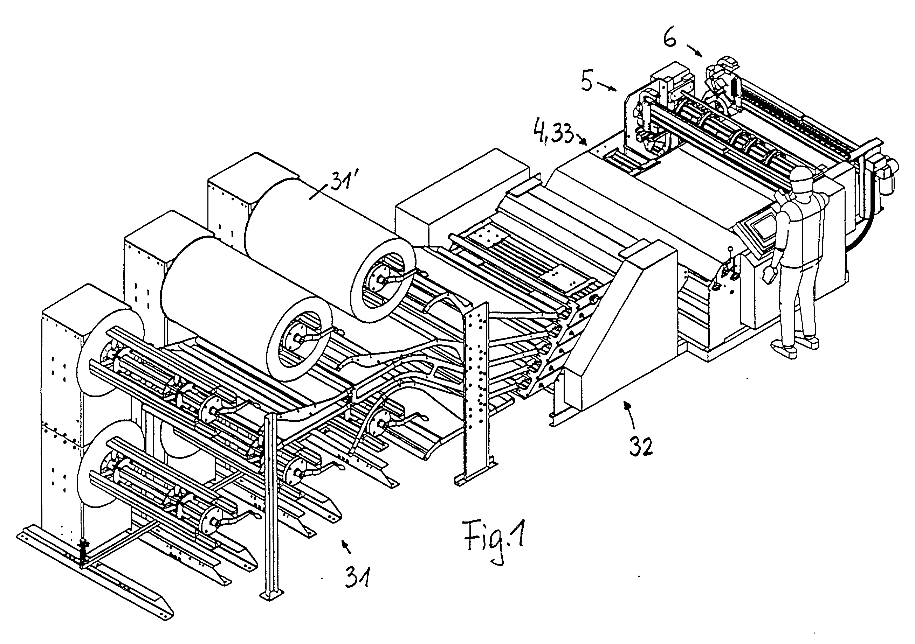

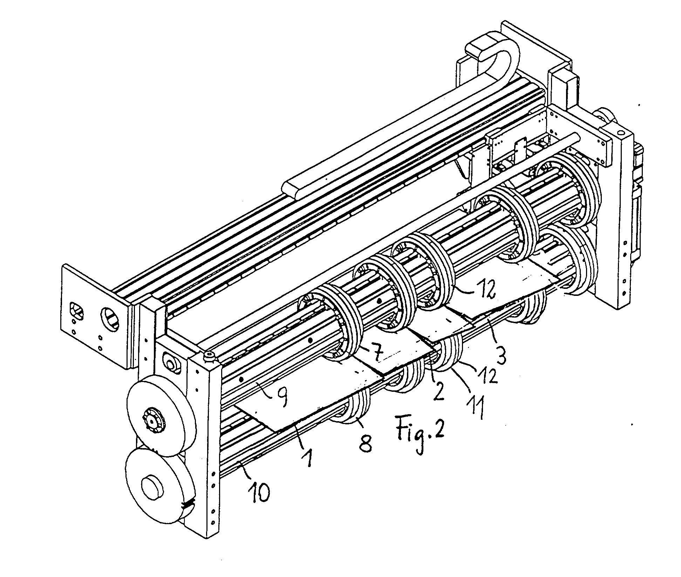

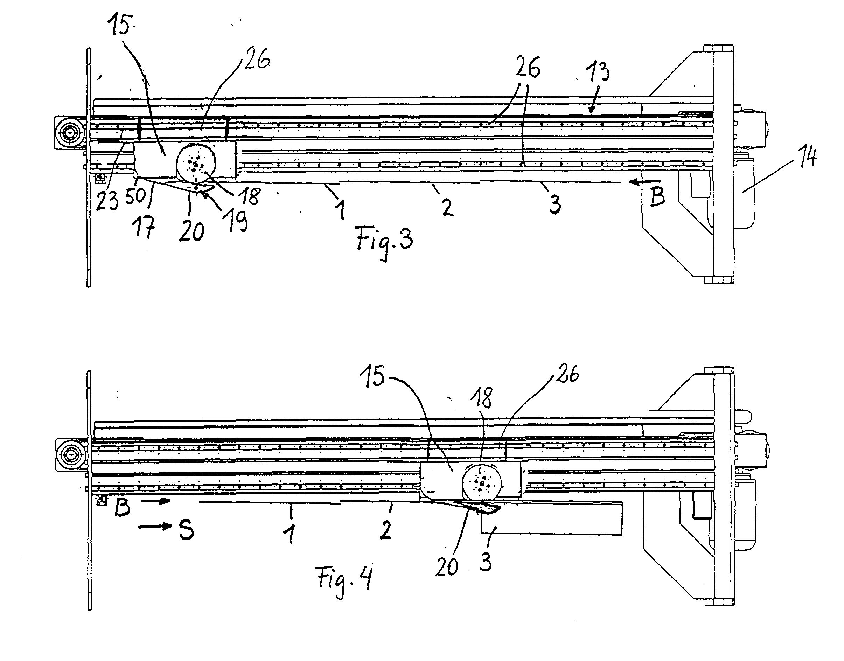

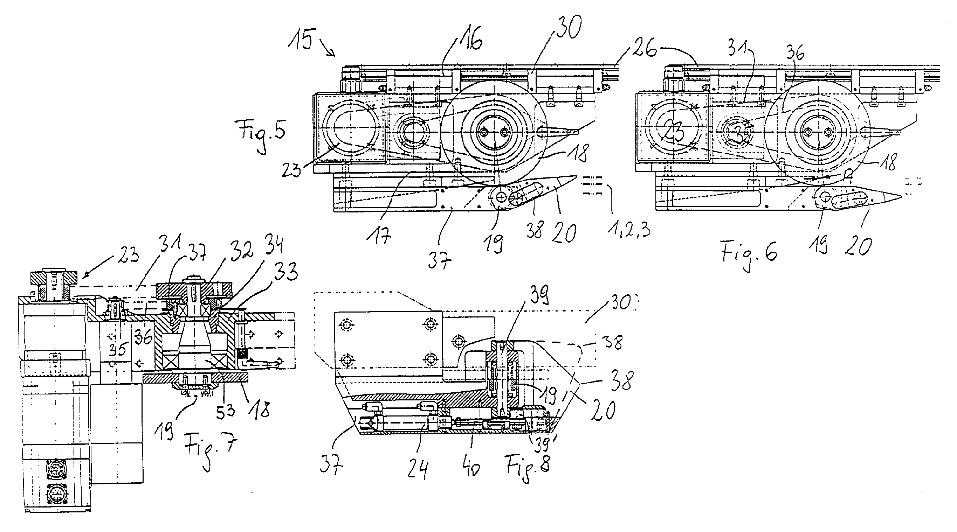

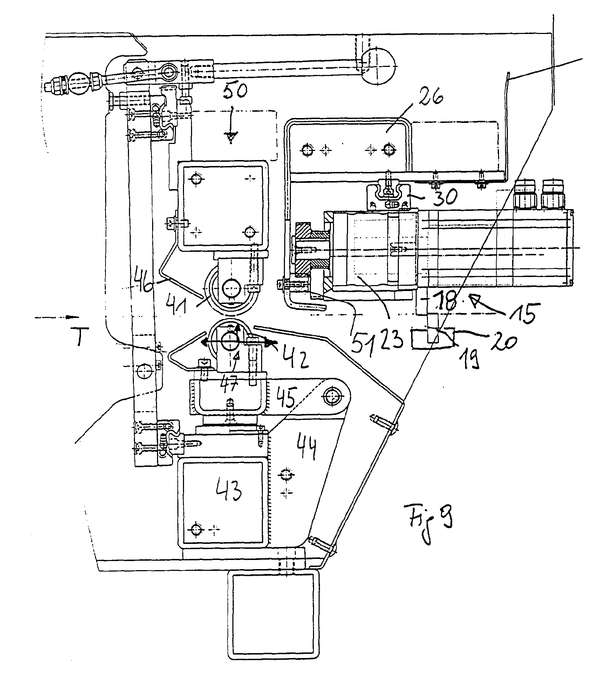

Fig. 1 zeigt schematisch eine Materialbahn-Bearbeitungseinheit, insbesondere eine automatische Mehrfachcoil- und Zuschnittanlage für Bandbleche. Fig. 2 zeigt schematisch eine Streifenschere mit Rollenmessern. Fig. 3 zeigt eine erfindungsgemäße Einrichtung bzw. Querschere in Vorderansicht bzw. gegen die Transportrichtung gesehen. Fig. 4 zeigt eine Querschere in Vorderansicht im Zuge des Ablängens einer Bahn. Fig. 5 zeigt eine Schneideinheit schematisch mit angehobenem Führungsschuh, Fig. 6 mit abgesenktem Führungsschuh, Fig. 7 in Draufsicht ohne Fangschuh und Fig. 8 im Horizontalschnitt. Fig. 9 zeigt eine der Schneideinheit vorgeordnete Richt- bzw. Stelleinheit.

Fig. 1 zeigt schematisch eine Gesamtansicht einer Einrichtung zur Bearbeitung von Materialbahnen, insbesondere von Blechbahnen oder Kunststoffbahnen. Mit 31 sind Abwickelgeräte bzw. Rollenträger bezeichnet. Die Materialbahnen bzw. Ausgangsbahnen werden von den jeweiligen Rollen 31' abgewickelt und einem Mehrfacheinzug 32 zugeführt, der ein automatisches Wechseln zwischen Bahnen verschiedener Dicke, verschiedener Breite, verschiedener Materialien usw. ermöglicht. Von diesem Mehrfacheinzug 31 wird die ausgewählte Bahn durch eine Richteinheit 33 und eine Einrichtung zur automatischen Breitenverstellung 4 geführt. In Folge wird die Blechbahn einer Längsteileinheit 5 zugeführt, der eine erfindungsgemäße Einrichtung 6 zum Querschneiden der einzelnen Blechbahnen nachgeordnet ist. In der Längsteileinheit 5 wird mit einer entsprechenden Anzahl von Rollenmessern 7, 8 die zugeführte Materialbahn in eine vorgegebene Anzahl von nebeneinander weitergeführten Einzelbahnen aufgeteilt. Die über die Breite der Materialbahn verstellbaren Rollenmesser 7, 8 schneiden die zugeführte Materialbahn in Längsrichtung in Einzelbahnen vorgegebener Breite. In der Einrichtung 6 zum Querschneiden können die einzelnen Bahnen 1, 2, 3 unabhängig voneinander geschnitten bzw. abgelängt werden. Die spezielle Konstruktion der erfindungsgemäßen Einrichtung 6 ermöglicht es, die von der Längsteileinheit 5 kommenden Bahnen 1, 2, 3 in unterschiedlicher Länge entsprechend dem Programm einer Zuschnittsoptimierungssoftware und gesteuert durch eine nicht dargestellte Positionier- bzw. Steuereinheit abzutrennen. Erfindungsgemäß kann jede der Bahnen an jeder beliebigen Stelle abgetrennt werden.

Fig. 2 zeigt eine Ansicht der Längsteileinheit 5. Die Längsteileinheit 5 weist eine Anzahl von Obermessern 7 und Untermessern 8 auf, die zusammenwirken und Längsschnitte in der zugeführten Materialbahn ausbilden, wobei im vorliegenden Fall die Obermesser 7 links von dem jeweils zugeordneten Untermesser 8 liegen. Die Obermesser 7 und Untermesser 8 sind auf einer oberen angetriebenen Messerwelle 9 und auf einer unteren angetriebenen Messerwelle 10 jeweils in Längsrichtung der Welle verschiebbar gelagert und für die Schneidstellung fix positionierbar. Damit können Bahnen 1, 2, 3 unterschiedlicher Breiten erstellt und der Einrichtung 6 zum Querschneiden zugeführt werden. Die Messerrollen 7, 8 sind gegenläufig angetrieben und fördern gegebenenfalls mit Unterstützung von weiteren Förderwalzen die einzelnen geschnittenen Materialbahnen in Richtung auf die erfindungsgemäße Einrichtung 6 zum Querschneiden.

Die Ober- und Untermesser 7,8 tragen Schneidringe 11 und Führungs- bzw. Stützringe 12. Soferne die Höhenniveaus der Umfangsflächen der Schneidmesser 11 bzw. der Führungsringe 12 unterschiedlich sind, können die die miteinander zusammenwirkenden Rollenmesser 7, 8 verlassenden Blechbahnen 1, 2, 3 eine Neigung bezüglich der Schneidebene aufweisen. Im in Fig. 2 und 3 links gelegenen Bereich ist das Höhenniveau des Seitenrandes einer Bahn (1, 2, 3 ) höher als in dem rechten Seitenrandbereich, da dort das Höhenniveau durch den niedriger gelegenen Umfang des Schneidmessers 11 bestimmt wird. Diese Neigung der Bahnen 1,2,3.... kann sich die erfindungsgemäße Einrichtung 6 zum Querschneiden zunutze machen, da sie - wie später beschrieben - die Tätigkeit des Fangschuhs 20 unterstützen kann. Diese Maßnahme stellt eine vorteilhafte Vorgangsweise dar.

Von besonderem Vorteil ist es, wenn die erfindungsgemäße Einrichtung 6 unmittelbar nach der Streifenschere 5 angeordnet ist.

Fig. 3 und 4 zeigen schematisch eine vorteilhafte Ausführungsform einer erfindungsgemäßen Einrichtung 6. Auf einer sich quer bzw. senkrecht zur Transportrichtung T der quer zu schneidenden Materialbahnen 1, 2, 3 erstreckenden Führungsbahn 13 ist mittels eines Antriebes 23 eine Schneideinheit 15 quer zu den Bahnen 1, 2, 3 mit einer nicht dargestellten Positioniereinheit verstellbar bzw. verschiebbar und beliebig positionierbar. Ein Grundkörper 33 oder Schlitten 30 der Schneideinheit 15 trägt einen Messerträger bzw. eine Messerplatte 17, auf dem zwei miteinander zusammenwirkende Rollenmesser 18 und 19 drehbar gelagert sind. Die Schneidrichtung 15 trägt einen zumindest das untere Rollenmesser 19 in Schneidrichtung S überragenden Fangschuh 20. Das obere Rollenmesser 18 und das untere Rollenmesser 19 sind auf einem Höhenniveau angeordnet, sodass die zugeführten Blechbahnen 1, 2, 3 etwa auf dem Niveau des Schneidbereiches zu liegen kommen. Der Antrieb des oberen Rollenmessers 18 erfolgt mit dem Antrieb 23 oder einem eigenen Antrieb. Das untere Rollenmesser 19 läuft mit. Die Schneideeinheit 15 ist mit dem Schlitten 30 auf den Führungsschienen 26 der Führungsbahn 13 verschiebbar bzw. verfahrbar gelagert. Die exakte Lagerung der Schneideinheit 15 auf der Führungsbahn 26 kann in unterschiedlicher Weise gelöst bzw. verwirklicht werden.

Die Schneideinheit 15 trägt eine Betätigungseinheit 24, z.B. einen Verstellzylinder zur Verstellung des höhenverstellbaren bzw. auf und ab verstell- bzw. verschwenkbaren Fangschuhs 20.

In Fig. 4 ist das Ablängen einer in drei Bahnen 1, 2, 3 längs geteilten Materialbahn über deren gesamte Breite dargestellt. Die von der Längsteileinrichtung 5 angelieferten Blechbahnen 1, 2, 3, die gegenüber der Bahnebene B leicht geneigt verlaufen können, werden mit einem Schnitt der Schneideeinheit 15 aufeinanderfolgend abgelängt. Alternativ kann in einer Schnittbewegung auch nur ein Schnitt zum Ablängen von einer oder zwei der drei Bahn(en) vorgenommen werden.

Fig. 4 zeigt das Ablängen einer Bahn 2, die zwischen zwei benachbarten Bahnen 1 und 3 gelegen ist. Die Schneideinheit 15 ist in Fig. 4 in einer Stellung dargestellt, in der die Endphase des Schnittes der Bahn 2 erfolgt. Der Schnitt beginnt, nachdem der Fangschuh 20 den rechte Randbereich der Bahn 1 niedergedrückt hat und sich unter den linken Rand der Bahn 2 eingefädelt hat. Damit führt der Fangschuh 20 die Bahn 2 in den Schneidbereich bzw. zwischen das obere Rollenmesser 18 und das untere Rollenmesser 19. Daraufhin wird die Schneideinheit 15 in Fig. 4 nach rechts in Schneidrichtung S verfahren, bis der Schnitt zu Ende geführt ist. Um den linken Seitenrand der Bahn 3 nicht zu verletzen, wird das vordere Ende des Fangschuhs 20 vor Erreichen der Bahn 3 angehoben und kann nach Erreichen der Bahn 3 mit seiner nach unten weisenden Fläche den Rand der Bahn 3 nach unten drückten, sodass die Bahn 3 nicht verletzt bzw. geschnitten wird bzw. die Schneideinheit 15 über der Bahn 3 verfahren werden kann.

Vorteilhafterweise erfolgt eine Ablängen von Materialbahnen 1, 2 oder 3 in einem durchgehenden Schnitt. Dabei verfährt die Schneideinheit vom einem Ende ihrer Führungsbahn bis zum gegenüberliegenden Ende und vollführt nur in den ausgewählten Bahnen einen Schnitt. Während der Bewegung der Schneideinheit 15 quer zur Materialbahn verstellt sich der Fangschuh 20 in entsprechender Weise gesteuert von der Steuer- bzw. Positioniereinheit und hebt zu schneidende Materialbahnen an und bringt diese in den Schneidbereich, um diese abzulängen und drückt, ohne dass die Schneideinheit 15 anhält, die nächstfolgende Materialbahn nieder bzw. bringt diese aus dem Schneidbereich, sodass die Schneideinheit 15 ohne anzuhalten weiter verfahrbar ist. Diese Betriebsweise ist einer Betriebsweise, in der die Schneideinheit 15 in eine bestimmte Schneidposition verfahren wird und dort den Schnitt beginnt, vorzuziehen, da hier lediglich eine Steuerung des Fangschuhs 20 bzw. dessen Verstellbewegung zu erfolgen hat, welche Bewegungen in einem ausreichenden Abstand vor der Kante bzw. dem Rand der zu schneidenden Materialbahn einzuleiten sind. Üblicherweise reicht ein Abstand von dem Rand der nächstfolgenden Materialbahn von 5 bis 15 cm, vorzugsweise von 8 bis 12 cm, aus, bei dem die Stellbewegung des Fangschuhs 20 einsetzt. Dieser Abstand hängt auch von der Schneidgeschwindigkeit ab mit dem die Schneideinheit 15 die Querschnitte durchführt.

Des weiteren ist zu bemerken, dass die Schneideinheit 15, die Schneidmesser 18, 19 auch auf ihrer nach oben gerichteten Seite aufweisen kann, d.h. dass der Körper 33 der Schneideinheit unterhalb der abzulängenden Materialbahnen 1, 2 und 3 mit nach oben gerichteten Rollenmessern quer zu diesen auf der Führungsbahn 26 verfahrbar sein kann. In diesem Fall erfolgt die Steuerung der Verstellbewegungen des Fangschuhs 20 in entsprechend abgeänderter Weise.

Fig. 5 zeigt eine Ansicht der in den Fig. 3 und 4 lediglich schematisch dargestellten Schneideinheit 15. Die Schneideinheit 15 ist auf der Führungsbahn 26 mit entsprechenden Führungen bzw. Schlitten 30 gelagert. Das obere Rollenmesser 18 ist, wie aus Fig. 7 ersichtlich ist, mit dem Antrieb 23 gekoppelt, der z.B. über einen Zahnriemen 31 ein Antriebszahnrad 32 des Obermessers 18 antreibt. Der Antrieb 23 verfährt vorteilhafterweise auch die Schneideinheit 15 auf der Führungsbahn 26. Das Obermesser 18 ist mit seiner Welle 53 auf der Schneideinheit 15 bzw. in deren Grundkörper 33 in einer Außengewindehülse 34 gelagert, welche Hülse 34 im Grundkörper 33 in einem Gegengewinde verdrehbar ist, u.zw. mit einem Antriebsmotor 35, der über einen Zahnriemen 36 ein Antriebszahnrad 37, das mit der Hülse 34 verbunden ist, verdreht bzw. verstellt. Bei einer Betätigung des Antriebsmotors 35 kann damit der Abstand des Obermessers 18 relativ zum Körper 33 verstellt werden. Am Körper 33 ist das Untermesser 19 in einer fix vorgegebenen Lage gelagert, sodass durch die Verstellbewegung des Obermessers 18 die Dicke des Schneidspaltes verstellt werden kann.

Von Vorteil ist es dabei, wenn das angetriebene, insbesondere obere Rollenmesser 18, größer ist als das mitlaufende, insbesondere untere Rollenmesser 19, wobei vorzugsweise der Durchmesser des mitlaufenden Rollenmessers 19, 10 bis 30 %, vorzugsweise 18 - 26 %, des angetriebenen Rollenmessers 18 beträgt. Die Achse des unteren Rollenmessers 19 ist in Schneidrichtung vor der Achse des oberen Rollenmessers 18 gelegen, wobei der Winkel A einer die beiden Achsen verbindenden Geraden zur Vertikalen bzw. Senkrechten 2 - 10°, vorzugsweise 4 - 7°, beträgt. Diese gegenseitige Lage und den eingeschlossenen Winkel A erkennt man insbesondere aus Fig. 5 und 6.

Es ist von Vorteil, wenn die Übersetzung zwischen dem Ritzel des Antriebsmotors 23 für die Schneideeinheit 15 und dem Antriebsritzel bzw. Antriebszahnrad 32 des Obermessers 18 derart gewählt ist, dass die Umfangsgeschwindigkeit des Obermessers 18 der Verstellgeschwindigkeit der Schneideinheit 15 auf der Führungsbahn 26 in vorgegebener Weise entspricht. Damit kann erreicht werden, dass die Schnittgeschwindigkeit des Rollenmessers 18 auf 80 - 120 %, vorzugsweise 90 - 110 %, insbesondere auf 100 % bzw. Schlupffreiheit der Vorschubgeschwindigkeit der Schneideinheit 15 auf der Führungsbahn 26 eingestellt werden kann.

Es kann vorgesehen sein, dass das untere Rollenmesser 19 und der Führungsschuh 20 auf einem Messerträger 37 angeordnet sind, der mit dem Grundkörper 33 der Schneideinheit 15 fest verbunden ist. Dieser Messerträger 37 kann auch die Betätigungseinrichtung für den Führungsschuh 20 tragen. In Fig. 8 ist ein Horizontalschnitt durch diesen Träger 37 dargestellt und man erkennt die Lagerung des Führungsschuhs 20. Der Führungsschuh 20 besitzt in Draufsicht eine etwa dreieckförmige Gestalt mit nach vorne im wesentlichen im mittleren Bereich auskragender Spitze 38. Der Führungsschuh 20 ist auf einer Achse 39 verschwenkbar gelagert, welche Achse im Träger 37 gelagert ist. Der Führungsschuh 20 besitzt einen Führungsschlitz 38, in den eine Rolle 39' eingreift, die am Ende der Triebstange 40 eines von der Steuereinheit betätigbaren Verstellzylinders 24 angeordnet ist. Da die Längserstreckung des Führungsschlitzes 38 in Bezug auf die Verstelllinie der Führungsstange 40 des Verstellzylinders 24 geneigt verläuft, bewirkt eine Verstellbewegung des Zylinders 24 eine Verschwenkung des Führungsschuhs 20.

In Fig. 5 ist der Führungsschuh 20 in einer angehobenen Lage dargestellt; in Fig. 6 ist der Führungsschuh in einer abgesenkten Lage in Bezug auf die Blechbahnen 1, 2, 3 dargestellt. Man erkennt, dass durch die Verstellbewegung des Führungsschuhs 20 der Führungsschuh unterhalb einer abzulängenden oder oberhalb einer nicht abzulängenden Blechbahn 1, 2, 3 verstellt bzw. verschwenkt werden kann.

Fig. 9. zeigt eine der Schneideinheit vorgeordnete Spanneinrichtung für zuzuführende Bleche.

Von Vorteil ist es, wenn der Schneideinheit 15 eine Stelleinheit bzw. eine Spannungseinheit 50 für die zugeführten Materialbahnen 1, 2, 3 vorgeordnet ist, mit der die Höhenlage der der Schneideinheit 15 zugeführten Materialbahnen einstellbar ist, die sich aufgrund ihres Gewichtes zumeist durchbiegen bzw. nach unten abhängen. Dabei kann vorgesehen sein, dass die Stelleinheit 50 parallel zur Führungsbahn 26 der Schneideinheit 15, vorzugsweise über die gesamte Breite der zu schneidenden Materialbahnen 1, 2, 3 verlaufende, Druckrollen 41, 42, umfasst, die mit einer vorzugsweise hydraulischen, pneumatischen oder elektrischen Stelleinrichtung 43 horizontal in Schneidrichtung und/oder vertikal relativ zueinander verstellbar sind und in geschlossener Stellung die zum Schnitt bereitstehenden Materialbahnen 1, 2, 3 zwischen sich einklemmen und während des Schnittes geschlossen verbleiben.

Vorteilhafterweise ist vorgesehen, dass die untere Druckrolle 42 gegenüber der oberen Druckrolle 41 höhenverstellbar ist bzw. in oder gegen Schneidrichtung gegenüber der Druckrolle 41 verstellbar ist. Diese Verstellmöglichkeiten sind in Fig. 9 mit den Pfeilen 47 angedeutet. Man erkennt, dass für den Fall, dass die Achse der Druckrolle 42 gegenüber der Achse der Druckrolle 41 nach rechts verstellt ist und ein entsprechender von unten Druck auf eine zwischen den beiden Druckrollen 41 und 42 verlaufenden Blechbahn ausgeübt wird, sich der vordere, der Schneideinheit 15 nahe Bereich der Materialbahnen nach oben verbiegen bzw. angehoben wird und nötigenfalls damit dem Bereich zwischen dem Rollenmesser 18 und dem Rollenmesser 19 besser angenähert werden kann, um so die Tätigkeit des Führungsschuhs 20 zu unterstützen, der in Fig. 9 nur schematisch dargestellt ist.

Gemäß Fig. 9 kämmt der Antrieb 23 auf einer Zahnstange 51 der Führungsbahn 26 bzw. ist die Schneideinheit 15 mit ihren Schlitten 30 auf der Führungsbahn 26 verschiebbar gelagert. Damit ist der Zusammenhang zwischen Vorschubgeschwindigkeit und Umfangsgeschwindigkeit des angetriebenen Rollenmessers 18 gegeben. Der Schneidspalt der Rollenmesser 18 und 19 befindet sich etwa auf der Höhe des Spaltes zwischen den Druckrollen 41 und 42, denen die Blechbahn in Transportrichtung T, unterstützt durch die Führungen 46, zugeführt wird.

Die Höhenverstellung und die Verstellung in oder gegen Transportrichtung der unteren Druckrolle 42 erfolgt mittels einer am Maschinengehäuse gelagerten Antriebseinheit 43, die gegebenenfalls einen höhenverstellbaren Tragarm 44 und einen auf diesem höhenverstellbaren Tragarm 44 schwenkbar gelagerten Schwenkarm 45 trägt, der seinerseits an seinem freien Ende die untere Druckrolle 42 entsprechend gelagert trägt. Die Druckrollen 41, 42 erstrecken sich vorzugsweise über die gesamte Breite der zu schneidenden Materialbahnen und klemmen zwischen sich das zu schneidende Blech während des gesamten Schneidvorgangs.

Während des Schneidvorganges verfährt die Schneideinheit 15 auf ihrer Führungsbahn 26 ohne ihre Höhenlage zu verändern, d.h. der Schnittspalt bzw. der Schneidbereich zwischen dem Obermesser 18 und dem Untermesser 19 verbleibt auf gleicher Höhe und die Zufuhr der zu schneidenden Blechbahnen 1, 2, 3 erfolgt durch die Tätigkeit des Führungsschuhs 20.

Vorteilhafterweise besitzt das angetriebene Obermesser 18 einen beträchtlich größeren Durchmesser als das Untermesser. Die Durchmesser verhalten sich etwa 4:1 bis 5:1.

Der Antrieb der Linearschlitten 30 mit dem Antriebsmotor 23 erfolgt mit der Steuer- bzw. Positioniereinheit, vorteilhafterweise mittels eines Inkrementalgebers, um exakte Positionierungen und Schnittlängen ausführen zu können.

Über einen Sensor, der auf dem Messerträger 17 oder dem Grundkörper 33 angebracht sein kann, kann festgestellt werden, ob sich neben bzw. vor der Schneideeinheit 15 bzw. neben den Rollenmessern 18 und 19 eine Bahn 1, 2, 3 befindet und somit kein Leerschnitt vorgenommen wird.

Im folgenden wird das erfindungsgemäße Schneidverfahren erläutert:

Für das Abtrennen von zugeführten Bahnen 1, 2, 3 über deren gesamte Breite bzw. um einen Null-Schnitt vorzunehmen oder alle von einer Streifenschere 5 kommenden Bahnen mit gleicher Länge abzutrennen, wird die sich vorerst in einer Grundstellung außerhalb des Transportbereiches der Materialbänder befindende Schneideeinheit 15 aktiviert. Der Fangschuh 20 ist in Ruheposition bzw. angehoben. Die Bahnen 1, 2, 3 sind mit der Stelleinheit 50 positioniert aber der Bahnenvorschubantrieb steht, d.h. das Materialband bzw. die Bahnen werden in Transportrichtung T nicht gefördert. Der Antrieb 23 für das obere Rollenmesser 18 wird eingeschaltet und mit dem Linearschlitten 30 erfolgt ein Transport der Schneideeinheit 15 quer zur Transportrichtung T der einzelnen Bahnen 1, 2, 3 nach vorangehender oder bei gleichzeitiger Verstellung des Fangschuhs 20. Nachdem die Rollenmesser 18 und 19 eine vom Fangschuh 20 angehobene Bahn zu schneiden beginnen, gerät der abgetrennte Bahnenteil bzw. der Seitenbereich der Bahn durch Absinken in den Melde- bzw. Sensorbereich des Sensors, sodass ein korrekter Schneidvorgang an die Steuereinheit gemeldet wird.

Sofern die Schneideeinheit 15 den von der Steuereinheit bzw. Positioniereinheit vorgegebenen Weg zurückgelegt hat, ist der entsprechende Bahnenteil abgetrennt, welchen Trennvorgang auch der Sensor bestätigt. Zuvor kann der Fangschuh 20 den Randbereich der in Schneidrichtung S voraus liegenden Bahn niedergedrückt haben.

Daraufhin wird die Schneideeinheit 15 in ihre Grundstellung verfahren oder für einen weiteren Schnitt weiterverfahren oder der Schneidvorgang wird in der benachbarten Bahn weitergeführt, nachdem diese vom Fangschuh erfasst bzw. dem Schneidbereich zugeführt wurde.

Bei einem Abtrennen einer Bahn 2, die zwischen zwei benachbarten Bahnen 1 bzw. 3 angeordnet ist (Fig. 4), könnte die Schneideeinheit 15 auch unmittelbar vor der abzutrennenden Bahn 2 positioniert werden. Der Bandvorschubantrieb steht bzw. die einzelnen Bahnen befinden sich in Ruhe. Der Fangschuh 20 wird positioniert. Dabei wird die Bahn, die nicht geschnitten werden soll, vom Fangschuh 20 nach unten gedrückt. Die zu schneidenden Bahn verbleibt jedoch auf ihrem ursprünglichen Höhenniveau und kann vom Fangschuh 20 unterfahren und erfasst werden. Dieser Vorgang könnte dadurch erleichtert werden, dass die von der Streifenschere kommenden Bahnen 1, 2, 3 durch den unterschiedlichen Durchmesser der Schneidringe 11 und der Stützringe 12 eine leichte Verdrehung bzw. Neigung aufweisen.

Daraufhin wird der Antrieb 23 eingeschaltet und mit dem angetriebenen Linearschlitten 26 wird die Schneideeinheit 15 durch die zu schneidende Bahn 2 gezogen.

Die Querschere bzw. die Schneideeinheit 15 wird nunmehr so positioniert bzw. weiter bewegt, bis der Fangschuh 20 vor dem Randbereich der benachbarten bzw. nächstfolgenden Bahn 3 steht. Nun wird das vordere Ende des Fangschuhs 20 angehoben und verfährt über den Randbereich der nächstfolgenden Bahn 3 und drückt diesen nach unten. Somit kann die Schneideeinheit 15 weiterfahren und den Schnitt vollenden, da die nach unten gedrückte Bahn 3 nicht erfasst werden kann, sondern unter dem unteren Rollenmesser 19 bzw. unter dem Führungsschuh 20 abgleitet.

Nachdem die Schneideeinheit 15 den von der Steuereinheit vorgegebenen Weg zurückgelegt hat, ist die Bahn 2 abgetrennt, welche Tatsache auch vom Sensor bestätigt wird. Daraufhin wird die Schneideeinheit 15 in ihre Grundstellung zurück oder in eine weitere, vorgegebene Schneidposition verstellt.

Die Breite des Fangschuhs 20 wird derart gewählt, dass er beidseits des Schneidspaltes verlängert bzw. sich seitlich über das Obermesser 18 und das Untermesser hinaus erstreckt.

Die Ober- und/oder Unterseite des Fangschuhs 20 können gerundet bzw. glatt ausgebildet sein, um Beschädigungen der Blechbahnen zu vermeiden.

Wie in Fig. 8 strichliert angedeutet, könnte der Fangschuh auch ein vorderes Ende bzw. eine Fangspitze 38 aufweisen, die seitlich versetzt ist. Die seitliche Versetzung erfolgt insbesondere in Richtung der zugeführten Materialbahnen 1, 2, 3.

Von Vorteil kann es sein, insbesondere wenn die über die Stelleinheit 50 zugeführte Materialbahn durchhängt oder wenn auf eine Stelleinheit 50 verzichtet wird, dass der Fangschuh 20 nicht nur eine vertikale Stell- bzw. Verschwenkbewegung ausführt, sondern dieser Bewegung eine Horizontalkomponente überlagert wird. Diese Horizontalkomponente wird derart überlagert, dass der Fangschuh eine Bewegung schräg etwa in einem Winkel von 20 bis 40, vorzugsweise von etwa 30°, zur Vertikalen, insbesondere zu einer von der Ebene der Rollenmesser 18, 19 aufgespannten Ebene verläuft. Der Fangschuh 20 bewegt sich somit ein einer Ebene, die geneigt zur Vertikalen verläuft und sein Ende des oberen Hubes liegt den zugeführten Materialbahnen 1, 2, 3 näher als das Ende seiner nach unten gerichteten Hubbewegung.

Dadurch kann der Fangschuh 20 leichter unter durchhängende Materialbahnen 1, 2, 3 eingreifen bzw. aus diesen heraustreten. In diesem Fall kann dem Fangschuh 20 auch eine abgeänderte Form erteilt werden; insbesondere erhält der Fangschuh 20 eine geneigte bzw. in Transportrichtung der Materialbahnen abfallende Oberfläche, gegebenenfalls mit Rundungen an den seitlichen Rändern bzw. Kanten.

Das Ausmaß der Horizontalbewegungen und/oder Vertikalbewegungen des Fangschuhs 20 ist einstellbar bzw. steuerbar bzw. den Gegebenheiten anpassbar. Dazu kann eine entsprechende Steuerung des Verstellzylinders 24 oder anderer vorgesehener Verschwenkeinheiten für den Fangschuh 20 vorgesehen sein.

Die Bewegung des Fangschuhs 20 kann auch über entsprechende Steuerkurven in vorgegebener Weise erfolgen. Zur Erzielung diese Bewegung könnte auch vorgesehen sein, die Schwenkachse 39 des Fangschuhs 20 aus der in Fig. 8 dargestellten Position um einen bestimmten Winkel, z.B. 20 bis 40°, vorzugsweise etwa um 30°, zu kippen, wobei das rollenmesserferne Ende dieser Schwenkachse gesenkt und das rollenmessernahe Ende der Schwenkachse angehoben wird. Damit würde eine zur im oberen Hubbereich in Richtung auf die zuzuführenden Materialbahnen 1, 2, 3 geneigte Schwenkbahn des Fangschuhs 20 erreicht werden. Änderungen der Tätigkeit des Fangschuhs 20 treten bei einem Kippen seiner Verstellungsebene nicht ein; auch nach einem Kippen bzw. Verstellen seiner Bewegungsebene erfolgt seine Tätigkeit im Zuge bzw. gleichzeitig mit der Verstellbewegung der Schneideinheit 15 bzw. gleichzeitig mit einem vorzunehmenden Schneidvorgang, insbesondere in dessen Endphase zum Absenken einer vorausliegenden nicht abzulängenden Materialbahn.

Soferne die Schneideinheit 15 unterhalb der Materialbahnen 1, 2, 3 verfahren wird, sind die getroffenen Ausführungen entsprechend abgeändert zu verstehen bzw. die beschriebenen Merkmale des Fangschuhs diesem Sachverhalt anzupassen bzw. umzukehren.

Möglich ist auch die Anordnung von mehreren Fangschuhen nebeneinander, die gegebenenfalls Schwenkbewegungen mit unterschiedlicher Verstellhöhe ausführen.

## Patentansprüche

1. Einrichtung zum Querschneiden von Bahnen, insbesondere von Blech- oder Kunststoffbahnen, mit zumindest einer quer zur Transportrichtung der Bahnen (1, 2, 3) auf zumindest einer Führungsbahn (13) verfahrbaren Schneideeinheit (15), wobei der Einrichtung (6) eine Anzahl von Materialbahnen nebeneinanderliegend zugeführt ist, wobei die Schneideeinheit (15) auf ihrer Führungsbahn (13), insbesondere mit zumindest einem Linearschlitten (16), mit einer Positionier- bzw. Steuereinheit verstell- bzw. verfahrbar und positionierbar ist und wobei die Schneideeinheit (15) in einer vorgegebenen Position oder ausgehend von einer vorgegebenen Position zur Ausführung von zumindest einem Querschnitt vorgegebener Länge antreibbar und auf der Führungsbahn (13, 26) verfahrbar ist, **dadurch gekennzeichnet, dass** an der ein oberes und ein unteres Rollenmesser (18, 19) aufweisenden Schneideinheit (15) oder auf einem von der Schneideinheit (15) getragenen Messerträger (17) zumindest ein den zwischen den Rollenmessern (18, 19) liegenden Schneidbereich der beiden Rollenmesser (18, 19) in Schneidrichtung überragender Fangschuh (20) verschwenkbar oder aufund abbewegbar gelagert ist, mit dem eine vor der Schneideinheit (15) befindlichen Materialbahn (1, 2, 3), insbesondere deren Randbereich, anhebbar bzw. dem Schneidbereich zuführbar oder niederdrückbar bzw. außerhalb des Schneidbereiches verbringbar ist, wobei gegebenenfalls der Schwenkbereich bzw. der Verstellbereich des vorderen bzw. des freien Endes des sich vorzugsweise nach vorne hin verjüngenden Fangschuhs (20) den Höhenlagenbereich der zu schneidenden Materialbahnen abdeckt bzw. übersteigt.

2. Einrichtung nach Anspruch 1, **dadurch gekennzeichnet, dass** von der Schneideinheit (15) oder dem von ihr getragenen Messerträger (17) zumindest eine Betätigungseinrichtung für den Fangschuh (20) getragen ist, mit der dem Fangschuh (20) eine Schwenkbewegung, vorzugsweise um eine senkrecht zur Ebene der Rollenmesser (18, 19) der Schneideinheit (15) verlaufende Schwenkachse oder eine Höhenbewegung parallel zur Ebene der Rollenmesser (18, 19) erteilbar ist, der gegebenenfalls eine Verstell- bzw. Schwenkbewegung senkrecht zur Ebene der Rollenmesser (18, 19) überlagerbar ist, wobei gegebenenfalls die Betätigungseinrichtung (24) einen, vorzugsweise pneumatisch, hin- und herbewegbaren Kolben mit Führungsstange (40) aufweist, die mit einer Rolle (39') in einem insbesondere im hinteren Endbereich des Fangschuhs (20) ausgebildeten, vorzugsweise in einem zur Bewegungsrichtung der Kolbenstange (40) geneigt verlaufenden, Führungsschlitz (38) bzw. Lager gelagert ist.

3. Einrichtung nach Anspruch 1 oder 2, **dadurch gekennzeichnet, dass** von der Schneideinheit (15) oder ihrem Grundkörper (33) oder vom Messerträger (17) ein Sensor getragen ist, der das Vorhandensein einer zu schneidenden Bahn (1, 2, 3) im Schneidbereich der Schneideinheit (15) feststellt.

4. Einrichtung nach einem der Ansprüche 1 bis 3, **dadurch gekennzeichnet, dass** das angetriebene, insbesondere obere, Rollenmesser (18), größer ist als das mitlaufende, insbesondere untere, Rollenmesser (19), wobei vorzugsweise der Durchmesser des mitlaufenden Rollenmessers (19) 10 bis 30 %, vorzugsweise 18 - 26 %, des angetriebenen Rollenmessers (18) beträgt und/oder, dass die Achse des nicht angetriebenen, vorzugsweise unteren Rollenmessers (19) in Schneidrichtung (S) vor der Achse des angetriebenen, vorzugsweise oberen Rollenmessers (18) gelegen ist, wobei vorzugsweise der Winkel (A) einer die beiden Achsen verbindenden Geraden mit der Senkrechten 2 - 10°, vorzugsweise 4 - 7°, beträgt.

5. Einrichtung nach einem der Ansprüche 1 bis 4, **dadurch gekennzeichnet, dass** zur Verstellung der Breite des Schnittspaltes zwischen dem oberen Rollenmesser (18) und unteren Rollenmesser (19) die beiden Messer mit einer Stelleinheit (34, 35, 36) relativ zueinander verstellbar sind, wobei vorzugsweise das untere, nicht angetriebene Rollenmesser (19) feststehend verbleibt.

6. Einrichtung nach einem der Ansprüche 1 bis 5, **dadurch gekennzeichnet, dass** die Schneideinheit (15), insbesondere ihr Grundkörper (33), einen Stellmotor (35) trägt, mit dem, insbesondere über einen Zahnriemen (36), eine in dem Grundkörper (33) in einem Gewinde gelagerte Gewindehülse (34), über ein an der Hülse befestigtes Treibrad, vorzugsweise Zahnrad (34), parallel zur Achse der Messer (18, 19) verstellbar ist, wobei die Hülse die Antriebswelle eines Rollenmessers, vorzugsweise die des oberen Rollenmessers (18) trägt und/oder, dass ein Antriebsmotor (23) sowohl zum Antrieb des angetriebenen, vorzugsweise des oberen Rollenmessers (18) als auch zum Antrieb der Schneideinheit (15) auf der Führungsbahn (26) vorgesehen bzw. eingerichtet ist und dass das Verhältnis der Zähnungen bzw. Umfänge des Abtriebzahnrades des Antriebsmotors (23) für das angetriebene Messer (18) und des Antriebsritzels bzw. -zahnrades (32) des angetriebenen Messers (18) derart gewählt ist, dass die Umfangsgeschwindigkeit des angetriebenen Messers (18) der Verstellgeschwindigkeit der Schneideinheit (15) auf der Führungsbahn (26) bzw. der Schnittgeschwindigkeit entspricht oder, dass die Umfangs- bzw. Schnittgeschwindigkeit des angetriebenen, vorzugsweise oberen, Rollenmessers (18) auf 80 - 120 %, vorzugsweise 90 - 110 %, insbesondere auf 100 % bzw. Schlupffreiheit in bezug auf die Vorschubgeschwindigkeit der Schneideinheit (15) auf der Führungsbahn (13, 26) eingestellt ist.

7. Einrichtung, insbesondere nach einem der Ansprüche 1 bis 6, **dadurch gekennzeichnet, dass** der Schneideinheit (15) eine Stelleinheit bzw. eine Spannungseinheit (50) für die zugeführten Materialbahnen (1, 2, 3) vorgeordnet ist, mit der die Höhenlage der der Schneideinheit (15) zugeführten Materialbahnen (1, 2, 3) einstellbar ist, wobei gegebenenfalls die Stelleinheit (50) parallel zur Führungsbahn (13, 26) der Schneideinheit (15), vorzugsweise über die gesamte Breite der zu schneidenden Materialbahnen (1, 2, 3) verlaufende, Druckrollen (41, 42), umfasst, die mit einer vorzugsweise hydraulischen, pneumatischen oder elektrischen Stelleinrichtung (43) horizontal in Schneidrichtung und/oder vertikal relativ zueinander verstellbar sind und in geschlossener Stellung die zum Schnitt bereitstehenden Materialbahnen (1, 2, 3) zwischen sich einklemmen.

8. Einrichtung nach einem der Ansprüche 1 bis 7, **dadurch gekennzeichnet, dass** die untere Druckrolle (42) verstellbar ist und die obere Druckrolle (41) feststehend angeordnet ist, und/oder dass die Achse der unteren Druckrolle (42) in Bewegungsrichtung B der Materialbahnen (1, 2, 3) vor oder hinter die Achse der oberen Druckrolle (41) verstellbar gelagert ist.

9. Einrichtung nach einem der Ansprüche 1 bis 8, **dadurch gekennzeichnet, dass** der Fangschuh (20) von der Positionier- bzw. Steuereinheit gesteuert höhenverstellbar bzw. verschwenkbar ist, und/oder dass die Rollenmesser (18, 19) im unteren bzw. nach unten weisenden bzw. untenliegenden Bereich der Schneideinheit (15) gelagert sind.

10. Einrichtung nach einem der Ansprüche 1 bis 9, **dadurch gekennzeichnet, dass** die Bewegung des Fangschuhes (20) gleichzeitig mit bzw. während der Verstell- und Schneidbewegung der Schneideinheit (15) quer zur Materialbahn (1) bzw. quer über die gesamte Breite der Materialbahn (1) erfolgen, und/oder dass die Schwenk- bzw. Verstellbewegung des Fangschuhs (20) eine vertikale Grundkomponente besitzt, der gegebenenfalls eine horizontale Bewegungskomponente, insbesondere für das Schneiden einer nach unten gebogenen bzw. herabhängend zugeführten Materialbahn (1, 2, 3) überlagert ist, und/oder dass die Schwenk- bzw. Verstellgeschwindigkeit und/oder vertikale und/oder horizontale Bewegungskomponente des Fangschuhs (20) bezüglich ihrer Größe einstellbar sind.
